# EUROPEAN PATENT APPLICATION

(11) **EP 3 789 265 A1**
(43) Date of publication of application: **10.03.2021**
(21) Application number: 20194447.7
(22) Date of filing: 03.09.2020
(51) Int. Cl.: B61L 25/02, B61L 23/04

(54) **METHOD AND SYSTEM FOR LOCALIZING A RAILWAY VEHICLE, AND RELATED RAILWAY VEHICLE**

(30) Priority: 04.09.2019 IN 201941035580
(71) Applicant: ALSTOM Transport Technologies, 93400 Saint-Ouen (FR)
(72) Inventor: GANESAN, Muniandi, 626001 Virudhunagar (IN)
(74) Representative: Lavoix

(57) **Abstract**

A system (100) and a method (200) for localizing a railway vehicle (1) traveling on a railway line (10), wherein one or more sensors (110) provide signals suitable for calculating a position (P) of the railway vehicle (1) along the railway line (10), the one or more sensors (110) comprising at least one ground penetrating radar (111). An imager system (120) comprises at least one camera (121) which is mounted on-board of the railway vehicle (1) and is adapted to capture image data of position markers (4) located along the railway line (1), and an image processor (125) which receives the image data captured and compare them with reference pre-stored image data related to the position markers (4) in order to identify a position marker (4) along the railway line (10) where the railway vehicle (1) is travelling. A processing unit (140) is arranged to calculate the actual position (Pa) of the railway vehicle (1) along the railway line (10) based on one or more of an identified position marker (4) and of the signals received from said one or more sensors (110). The invention also relates to a railway vehicle (1) comprising a localizing system (100) installed on board.

## Description

The present invention relates in general to a method and a system for localizing a railway vehicle travelling along a railway line, and to a related railway vehicle.

As it is known, railway transportation systems are widely and increasingly used worldwide.

As a consequence, the growing number of railway vehicles has resulted in increasing the complexity and extension of available infrastructures, such as track layouts and related equipment, as well as of the related control systems which are required to safely manage networks which are more and more congestioned.

To this end, an important aspect is related to the possibility of precisely and timely localizing the position of railways vehicles during their service.

In fact, with this information it is possible, for example, to determine if a train is travelling in the right direction and to correlate such information with respect to other trains servicing at the same time in close areas; in this way, it is possible to better manage the whole traffic in a monitored area, and in particular to mitigate the possibility of perturbations and failures of rail systems, and especially to reduce, if not to completely prevent, the risks of collisions.

To avoid such issues, there have been proposed and implemented different solutions, one of which foresees to exploit global positioning systems, or GPS, in order to track the position of railway vehicles travelling on a rail network.

This solution is not cost effective and in some cases is not truly reliable and efficient, due for instance to accuracy limits which do not allow to clearly identify which track of a pair of sided tracks a train is travelling along, or due to areas not covered by satellites.

Other solutions used in mainline rail systems foresee to localize trains using balises installed along the railway track and adapted to wirelessly communicate with a railway vehicle passing over the balise or track circuits.

However, the installation of several balises or track circuits which, for long-distance tracks could be in the order of thousands, is not fully satisfactory in terms of time, cost and maintenance aspects.

Therefore, there is substantial room and desire for further improvements in the way railway vehicles are localized when travelling along railway lines.

To this end, a main aim of the present invention is to provide a solution for a more timely and precise localization of a railway vehicle travelling along a railway line, in particular without the need of installing on the railway line additional equipment provided ad hoc for localization purposes.

Within the scope of this aim, an object of the present invention is to provide a solution which allows localizing the actual position of a railway vehicle along a railway line in a manner that substantially reduces, if not completely eliminates, the influence of external and/or operative conditions, such as darkness, the presence of snow, and the like.

Another object of the present invention is to provide a solution which allows localizing the actual position of a railway vehicle autonomously by the rail vehicle itself.

Yet a further object of the present invention is to provide a solution for the localization of a railway vehicle travelling along a railway line, which is highly reliable, relatively easy to realize and implement at competitive costs.

This aim, these objects and others which will become apparent hereinafter are achieved by a system for localizing a railway vehicle traveling on a railway line, characterized in that it comprises at least:
- one or more sensors providing signals suitable for calculating a position of the railway vehicle along the railway line, said one or more sensors comprising at least one ground penetrating radar;
- an imager system comprising at least one camera mounted on-board of the railway vehicle and adapted to capture image data of position markers located along the railway line, and an image processor configured for receiving the image data captured and for comparing them with reference pre-stored image data related to the position markers in order to identify a position marker along the railway line where the railway vehicle is travelling;
- a processing unit which is arranged to calculate the actual position of the railway vehicle along the railway line based on one or more of an identified position marker and of the signals received from said one or more sensors.

According to other peculiar aspects and possible embodiments, the system for localizing a railway vehicle traveling on a railway line according to the present invention comprises one or more of the following characteristics taken individually or in any possible combination:
- the one or more sensors further comprises at least one multi-axis inertial sensor,
- the at least one multi-axis inertial sensor comprises at least one multi-axis gyroscope;
- the at least one multi-axis inertial sensor comprises at least a multi-axis accelerometer combined with an extended Kalman filter;
- the at least one ground penetrating radar comprises a first transmitter and an associated first receiver operating at a first frequency for providing first data indicative of the subsurface under the railway line where the railway vehicle is travelling, and a second transmitter and an associated second receiver operating at a second frequency for providing second data indicative of elements or parts present on or associated to the railway line to be cleaned from said first data;
- the imager system comprises at least a first camera mounted on-board of the railway vehicle with its field of vision oriented to capture first image data of position markers located along the railway line, and a second camera mounted on the railway vehicle with its field of vision oriented to capture second image data of identifiers uniquely associated each to a corresponding position marker;
- the image processor is configured to initialize the second camera for capturing said second image data of identifiers uniquely associated each to a corresponding position marker upon identifying the presence of a position marker based on the comparison of said reference pre-stored image data related to the position markers with at least the captured first image data provided by the first camera;
- the image processor is configured to initialize said ground penetration radar for providing said signals suitable for calculating a position of the railway vehicle along the railway line, upon identifying the presence of a position marker based on the comparison of said reference pre-stored image data related to the position markers with at least the captured first image data provided by the first camera;
- the first camera is mounted on-board of the railway vehicle with its field of vision oriented opposite to the direction of travel of the railway vehicle, and wherein the imager system comprises a third camera mounted on-board of the railway vehicle with its field of vision oriented in the direction of travel of the railway vehicle to capture third image data of position markers located along the railway line;
- the image processor is arranged to identify the presence of a position marker when both said first and third image data captured by said first camera and said third camera match with corresponding pre-stored first image data and third image data related to said position markers;
- one or more databases comprising data selected from the group comprising but not limited to reference image data related to said position markers, reference image data related to unique identifiers associated each to a corresponding position marker, identification data related to a layout and/or parts or components of the railway line, identification data related to said position markers, data calculated based on signals provided by at least said at least one ground penetrating radar.

The above mentioned aims and objects of the present invention are also achieved by a method for localizing a railway vehicle traveling on a railway line, characterized in that it comprises at least the following steps:
- (a): providing signals suitable for calculating a position of the railway vehicle along the railway line, wherein the provided signals include at least signals provided by at least one ground penetrating radar;
- (b): comparing captured image data of position markers located along the railway line with reference pre-stored image data related to said position markers in order to identify a position marker along the railway line where the railway vehicle is travelling;
- (c): calculating the actual position of the railway vehicle along the railway line based on one or more of the identified position marker and of the signals provided.

According to other peculiar aspects and possible embodiments, the method for localizing a railway vehicle traveling on a railway line according to the present invention comprises one or more of the following characteristics taken individually or in any possible combination:
- the step (b) of comparing comprises a sub-step of identifying the presence of a position marker along the railway line when at least first image captured by a first camera match with corresponding pre-stored first image data related to the position markers;
- the step (b) of comparing comprises a further sub-step of triggering a second camera to capture second image data of identifiers uniquely associated each to a corresponding position marker and/or detection by said ground penetration radar for providing said signals suitable for calculating a position of the railway vehicle along the railway line, upon identifying the presence of a position marker based on the comparison of said reference pre-stored image data related to the position markers with at least the captured first image data provided by the first camera;
- the step (b) of comparing comprises a sub-step of identifying the presence of a position marker along the railway line when captured first image data and third image data captured by a third camera and different from said first image data, match both with corresponding pre-stored first image data and third image data related to the position markers;
- the step (a) of providing a plurality of signals comprises providing signals indicative of the actual acceleration of the railway vehicle and of the subsurface under the railway line where the railway vehicle is actually transiting, and wherein said step (c) of calculating comprises calculating the actual position of the railway vehicle between a first position marker whose presence has been identified and a following position marker to be reached, based on signals indicative of the actual acceleration of the railway vehicle, data relative to the first position marker, and the actual data related to the subsurface under the railway line where the railway vehicle is actually transiting.

The present invention also provides a railway vehicle characterized in that it comprises, preferably installed on-board, at least one localizing system according to the relevant appended claims, and as per details given in the following description.

Further characteristics and advantages will become apparent from the description of some preferred but not exclusive exemplary embodiments of a method, system and related railway vehicle according to the invention, illustrated only by way of non-limitative examples with the accompanying drawings, wherein:
Figure 1 is a block diagram schematically illustrating a system for localizing a railway vehicle travelling along a railway line according to the invention;
Figure 2 is a schematic illustration of a railway vehicle with the system depicted in figure 1 installed on-board;
Figure 3 schematically shows exemplary views of catenary poles captured by two cameras mounted on board of a railway vehicle according to the present invention;
Figure 4 schematically illustrates an exemplary portion of a railway line with catenary poles and related identifiers uniquely associated each to a corresponding pole;
Figure 5 is a flow chart schematically illustrating a method for localizing a railway vehicle travelling along a railway line, according to the invention.

It should be noted that in the detailed description that follows, identical or similar components, either from a structural and/or functional point of view, have the same reference numerals, regardless of whether they are shown in different embodiments of the present disclosure.

It should be also noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

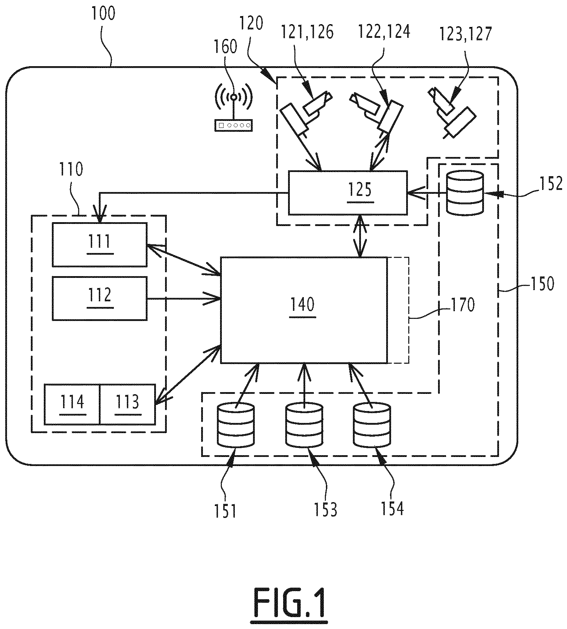

A system for localizing a railway vehicle travelling along a railway line according to the invention is schematically illustrated in figure 1 and therein indicated by the overall reference number 100, hereinafter referred to as the localizing system 100.

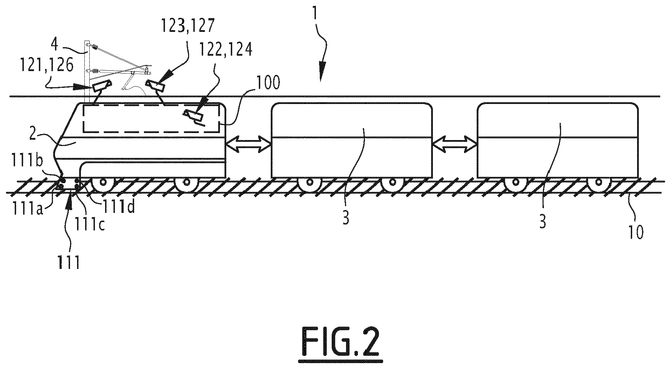

The localizing system 100 according to the invention can be used in connection with any suitable type of railway vehicle, an example of which is illustrated in figure 2 in the schematic form of a train 1, having a locomotive 2 and two carriages 3, travelling along a railway line 10.

As those skilled in the art would easily appreciate, the term railway vehicle herein used encompasses any suitable type of railway vehicle which can be composed by any number of locomotives or equivalent traction units, and associated one or more carriages, railcars, vehicles, or the like.

As illustrated in figure 1, the localizing system 100 according to the present invention comprises at least:
- one or more, preferably a plurality of, sensors 110 providing signals suitable for calculating a position (P) of the railway vehicle 1 along the railway line 10;
- an imager system 120 comprising at least one camera 121 mounted on-board of the railway vehicle 1 and adapted to capture images data, e.g. videos/pictures, of a plurality of pre-installed position markers 4 which are located along the railway line 10, and an imager processor 125 which receives the image data captured by the at least one camera 121. The processor 125 compares the images data captured with reference pre-stored image data related to the position markers 4 in order to identify and confirm the presence of a position marker 4 along the railway line 10 where the railway vehicle 1 is travelling.

The localizing system 100 comprises a processing unit 140 which is arranged to calculate the actual position (Pa) of the railway vehicle 1 along the railway line 10 based on one or more of the identified presence of a position marker 4 and of the signals received from the one or more sensors 110.

The processing unit 140 comprises a processor, or processor-based device or controller, and can comprise any suitable type of commercially available processor or microprocessor suitably programmed with software, and to the extent needed accompanied with suitable circuitry, for performing the functionalities it is used for.

Further, the localizing system 100 according to the present invention is particularly suitable for being used in connection with railway lines associated with power aerial lines, namely the so-called catenaries, which electrically supply railway vehicles travelling over an associated railway line.

Such catenaries, according to solutions well known in the art, and therefore not described herein in details, comprise a plurality of catenary cantilever poles distributed along a railway line, such as the railway line 10, spaced apart from each other, for example at regular intervals of 50-60 meters.

Hence, for the sake of illustration of the localizing system 100, in the following description, when referring to position markers located along a railway line, reference will be made specifically to cantilever poles of a catenary, schematic examples of which are represented in figures 2, 3 and 4 by the reference number 4.

Clearly, such reference should not be intended in any way as limiting the application of the localizing system 100 according to the invention to other types of railway lines provided with different type of pre-installed parts or equipment distributed along the railway line and which may serve as position markers for the scope of the present invention, likewise the cantilever poles 4.

Advantageously, the one or more sensors 100 comprise at least one ground penetration radar (GPR) 111.

In particular, as schematically illustrated in figure 2, the ground penetration radar (GPR) 111 is mounted on-board of the railway vehicle 1, for instance under the front vehicle 2, and is configured to capture the subsurface beneath the tracks of the railway line 10 and to send corresponding signals to the processing unit 140 for proper elaboration.

According to an embodiment, and as schematically represented in figure 1, the ground penetration radar 111 comprises a first transmitter 111a and an associated first receiver 111b operating at a first frequency, for instance high frequency, for example in the range of 0.4 to 1 GHz, for providing first data indicative of, namely to map, the subsurface under the railway line 10 where the railway vehicle 1 is travelling, and a second transmitter 111c and an associated second receiver 111d operating at a second frequency, e.g. a lower frequency, which are used to provide signals indicative of second data to be cleaned from the first data. Such signals carrying the second data are related to parts or elements associated to or present along the superficial part of the railway line 10 not strictly related to the subsurface under mapping, such as thickness of ballast, snow, or ice, and the like, and are used to correct the first data provided via the signals output by the first coupled transmitter 111a- receiver 111b.

In practice, via the ground penetration radar 111, maps of the subsurface under the railway line 10 are constructed at each catenary location and at each incremental distance therefrom desired, for instance every 10 meters, and can be confronted with expected pre-stored maps, as it will be described more in details hereinafter.

Constructed data can be 2-dimensional or 3-dimensional depending on the applications or users' choice.

The ground penetration radar above mentioned can be constituted by any commercially available type of ground penetration radar suitably adapted for the scope it is foreseen within the frame of the present invention. According to a possible embodiment of the localizing system 100, the one or more sensors 110 further comprise also at least one multi-axis inertial sensor.

In particular, according to possible embodiments, and as schematically illustrated in figure 1, the at least one multi-axis inertial sensor comprises at least a multi-axis gyroscope 112, and/or at least a multi-axis accelerometer 113.

According to a possible embodiment, the localizing system 100 comprises a three-axis gyroscope 112 and a three-axis accelerometer 113.

The various multi-axis sensors above mentioned can be constituted by commercially available MEMS sensors.

The multi-axis gyroscope 112, installed on-board of the railway vehicle 1, is adapted to detect rotational or angular movements of the railway vehicle 1, and in particular it is aimed at providing the processing unit 140 with signals indicative of track changeovers encountered by the railway vehicle 1 during its travel along the railway line 10, thus detecting when the railway vehicle 1 has deviated from the previous direction due to the presence of points along the line.

In turn, the multi-axis accelerometer 113, installed on-board of the railway vehicle 1, is adapted to detect, e.g. continuously, the actual acceleration of the railway vehicle 1 and to provide corresponding signals indicative of such actual acceleration to the processing unit 140.

In particular, in the system 100 according to the present invention, the multi-axis accelerometer 113 is used in connection with an extended Kalman filter and further algorithm 114 which filters out random white noise from the measurements of the accelerometer 113.

In this way, from the measurements of the accelerometer 113 and related extended Kalman filter 114, it is possible to derive an estimation of the actual speed and position of the railway vehicle 1, without the need of an odometer or like sensors. Such information is used to propagate the location of the railway vehicle 1 between catenary poles, i.e. the actual distance travelled from a catenary pole 4 before reaching the following pole 4. The catenary poles are used to reset the incremental distance estimates based on the availability of catenary unique identifiers 5 measurements, at a certain distance, for example of 50 meters to 60 meters, or based on measurements of the ground penetration radar 111, for example at the intervals of 10 meters.

According to a possible embodiment, and as illustrated in figures 1 and 2, the imager system 120 comprises at least a first camera 121 mounted on-board of the railway vehicle 1 with its field of vision oriented to capture first image data of position markers 4 located along the railway line 10, and a second camera 122 mounted on-board of the railway vehicle 1 with its field of vision oriented to capture second image data of identifiers 5 uniquely associated each to a corresponding position marker 4.

In one possible embodiment, the image processor 125 is configured to initialize the second camera 122 for capturing the second image data of identifiers 5 uniquely associated each to a corresponding position marker 4 upon identifying the presence of a position marker 4 based on the comparison of the reference pre-stored image data related to the position markers 4 with at least the captured first image data provided by the first camera 121.

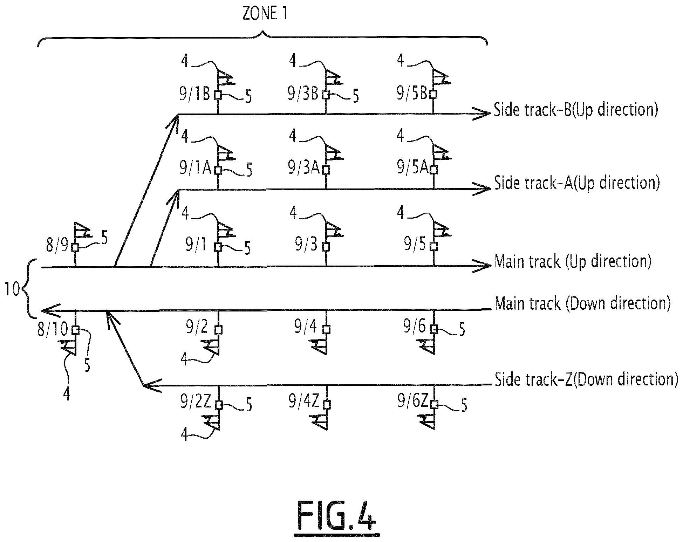

Identifiers 5 can be constituted by any suitable type whose image can be captured by the second camera 122. For example, they can be represented by plates affixed each to one side or both sides of an associated catenary pole 4 and bearing readable identifying information. Each identifier or number plate 5 can bear information about its kilometric point and pole number, as for example illustrated in figure 4 where the indication 9/1 would indicate the "9th" kilometric starting point of the relevant zone, "1" indicates the first pole at the 9^{th} kilometric point. In the case of double tracks, "odd numbers" are used for the "up" direction towards the reference point and "even numbers" are used for the "down" direction. For sidings or branch lines or platform lines at the station, the different numbering schemes such as adding additional letters "A", etc. are used for slow speed train movement. The zone numbers are basically the predefined sectors into which a railway line 10 is pre-segmented.

Preferably, in the localizing system 100 according to the invention, the image processor 125 is also configured to initialize or trigger detection by the ground penetration radar 111 for providing the signals suitable for calculating a position (P) of the railway vehicle 1 along the railway line 10, upon identifying the presence of a position marker 4 based on the comparison of the reference pre-stored image data related to the position markers 4 with at least the captured first image data provided by the first camera 121.

The ground penetration radar 111 and the second camera 122 can be triggered by the image processor 125 substantially simultaneously upon identifying the presence of a position marker 4, or in any desired sequence.

According to a possible embodiment, the first camera 121 is mounted on-board of the railway vehicle 1 with its field of vision oriented opposite to the direction of travel of the railway vehicle 1, and the image system 120 comprises a third camera 123 mounted on-board of the railway vehicle 1 with its field of vision oriented in the direction of travel of the railway vehicle 1 to capture third image data of position markers 4 located along the railway line 10.

Accordingly, the image processor 125 is arranged to identify the presence of a position marker 4, and thereafter trigger or initialize the second camera 122 and the ground penetration radar 111, when both the first and third image data captured by the first camera 121 and the third camera 123 match with corresponding pre-stored first image data and third image data related to the position markers 4.

The position of the various cameras 121, 122 and 123 can be suitably selected, for example they can be positioned outside of and at a forward zone of the rail vehicle 1. For instance, as illustrated in the example of figure 2, the first camera 121 and the third camera 123 can be placed over the roof of a railway vehicle 1, for instance of the first vehicle in case of a multi-vehicle convoy, spaced apart from each other, while the second camera 122 can be positioned on a side of a railway vehicle 1.

Usefully, in one possible embodiment, in the imager system 120 the group of first, second and third cameras 121, 122 and 123 can be doubled using a fourth camera 124, a fifth camera 126 and a sixth camera 127, all mounted on board of the railway vehicle 1 as well.

In particular, the fourth camera 124 is equivalent to and pairs with the second camera 122, and for instance they can be mounted one of a right side of a railway vehicle and the other one on the opposite left side.

In this way, depending on the direction of the railway vehicle 1, and therefore on which side of it there are located position markers 4 and related identifiers 5, either the second camera 122 or the fourth camera 124 can be alternatively used for capturing the second image data of identifiers 5 uniquely associated each to a corresponding position marker 4.

In turn, the fifth camera 126 and the sixth camera 127 are equivalent to and pair with the first camera 121 and the third camera 123, respectively.

In particular, the fifth camera 126 can be mounted on-board of the railway vehicle 1 with its field of vision oriented opposite the direction of travel of the railway vehicle 1 likewise the first camera 121, and the sixth camera 127 can be mounted on-board of the railway vehicle 1 with its field of vision oriented in the direction of travel of the railway vehicle 1 likewise the third camera 123.

For example, the first camera 121 and the third camera 123 can be placed over the roof of a railway vehicle 1 on a right side thereof, while the fifth camera 126 and the sixth camera 127 can be placed over the roof of a railway vehicle 1, e.g. the same roof, on a left side thereof.

In this way, depending on the direction of the railway vehicle 1, and therefore on which side of it there are located position markers 4, either the first and third cameras 121 and 123 or the fifth and sixth camera 125 and 126 can be alternatively used for capturing the first and third image data related to position markers 4.

Each of the cameras used can be a high-speed camera with night vision capabilities of any suitable type commercially available.

According to a possible embodiment, and as schematically illustrated in figure 1, the localizing system 100 according to the invention comprises one or more databases 150 comprising data selected from the group comprising but not limited to reference image data related to the position markers 4, reference image data related to unique identifiers 5 associated each to a corresponding position marker 4, identification data related to the position markers and to a layout and/or other parts or components of the railway line 10, such as predefined zones thereof, switch points or track changeovers, reference identification data (hereinafter ID), and/or kilometric points and/or list of upcoming position markers 4 along the railway line 10, data calculated based on signals provided by the one or more sensors, and in particular by the at least one ground penetrating radar 111.

Clearly, some of the data can be always the same, e.g. the pre-stored reference images or pre-stored maps of the subsurface under the railway line, and some can be related to actual calculations and therefore be updated, for instance those provided via the one or more sensors 110.

According to a possible embodiment, and as schematically illustrated in figure 1, the one or more databases 150 include:
- a first repository 151, or catenary pole image database, which contains at least pre-stored one or more reference images of the catenary poles 4 to be compared with the images captured and provided by the cameras 121/123 or 126/127 in order to identify the presence of a catenary pole 4;
- a secondary repository 152, or catenary pole unique identifiers image database, which contains at least pre-stored one or more reference images of the number plates, or equivalent identifiers 5, to be compared with the images captured and provided by the cameras 122 or 124, in order to uniquely identify a catenary pole 4 whose presence has been detected;
- a third repository 153, or catenary pole database, containing for example data related but not limited to: zone numbers of the various zones into which a railway line can be segmented, unique catenary pole identification numbers, absolute location kilometric point of each pole 4, upcoming catenary pole ID, upcoming catenary pole in terms of incremental distance calculated by the accelerometer 113 and related Kalman filter 114, angle calculated by the gyroscope 112 where a deviation on the left would have a +ve polarity, and a deviation on the right would have a -ve polarity, while the value for no deviation would be set as zero.

For example, the data contained in the third repository 153 would look like the following sequence "zone number, catenary pole ID, location kilometric point, list of upcoming catenary poles IDs, list of upcoming catenary poles (distance, angle)"; for instance, referring to the exemplary layout of figure 4, direction UP would read "Zone1, 8/9, 1550, 9/1|9/1B|9/1A, (50,0)|(20, +20)|(30,+20)" where identifier 9/1A identifies that the relevant catenary pole 4 is located at the transition slow reduced speed track A; the identifier 9/1B identifies that the relevant catenary pole 4 is located at the transition slow reduced speed track B. 9/1 - signifies that the catenary pole is located at the transition mainline normal speed track, do not have any suffix. In the example illustrated, the suffixes are added with the letters from A to M, A1 to M1, A2 to M2, etc. for the "up" direction.

In turn, for the opposite down direction, the corresponding sequence of data would read: "zone1, 8/10, 1550, 9/2|9/1Z, (50, 0)|(20, -20)". For example, still referring to the exemplary layout depicted in figure 4, "9/2Z" indicates that the catenary pole 4 is located at the transition slow (reduced) speed track Z; for this direction, the suffixes are added with the letter from Z to N, Z1 to N1, Z2 to N2, etc. for "down" direction.

The localizing system also comprises a fourth repository 154, or catenary pole/accelerometer distance - ground penetration radar database, containing for example data related and not limited to: zone numbers of the various zones into which a railway line can be segmented, unique catenary pole identification numbers, incremental distances from catenary poles using estimates provided by the accelerometer and associated extended Kalman filter, maps related to the subsurface under the railway line 10 to be compared with those provided by the ground penetration radar 111. These data are useful for localizing the railway vehicle 1 in a kind of autonomous way; for example, these data would look like "zone number, catenary pole ID, incremental distance, radar maps", such as for instance "zone1, 1/5, "0", radar map R, and then "zone1, 1/5, "10", radar map Q", et cetera.

In the example illustrated, the repositories 151-154 have been illustrated as separate databases, such as a catenary pole image database 151, a catenary pole unique identifiers image database 152, catenary pole database 153, and a catenary pole/accelerometer distance - ground penetration radar database 154; of course, they can be part of a same database or they can be merged in a number of databases different from that illustrated.

The localizing system 100 can also comprise a device 160, e.g. a transceiver, for communicating data on board of the train itself, or outside.

Further, it comprises a human or driver machine interface 170 for entering a zone number manually, for instance by the driver, or to receive the zone number automatically from remote trackside equipment, and displaying it in the screen.

According to an embodiment, the various parts and components of the localizing system 100 are suitably and completely installed on-board of a railway vehicle 1, which is therefore capable of autonomously self-locating its position along a railway line over which it is travelling.

Alternatively, the localizing system 100 can have some parts mounted on-board and some others can be located remotely, e.g. in a main control room of the railway line 10.

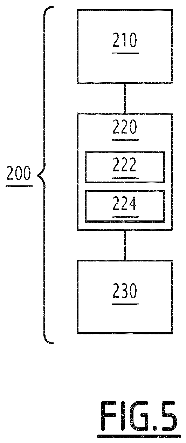

Figure 5 illustrates a method 200 for localizing a railway vehicle 1 traveling on a railway line 10 according to the present invention, which comprises at least the following steps:
- 210: providing signals suitable for calculating a position (P) of the railway vehicle 1 along the railway line 10, wherein the provided signals include at least signals provided by at least one ground penetrating radar 111;
- 220: comparing, for example via the image processor 125, image data of position markers 4 located along the railway line 1, captured for example by one or more of the cameras 121-124, with reference image data related to said position markers 4 and pre-stored for example in the first repository 151, in order to identify a position marker 4 along the railway line 10 where the railway vehicle 1 is travelling; and
- 230: calculating, for instance via the processing unit 140, the actual position (Pa) of the railway vehicle 1 along the railway line 10, based on one or more of the identified position marker 4 and the signals provided by the one or more sensors 110.

According to an embodiment, the step 220 of comparing comprises a sub-step 222 of identifying the presence of a position marker 4 along the railway line 1 when at least first image captured by a first camera 121 match with corresponding pre-stored first image data related to the position markers 4.

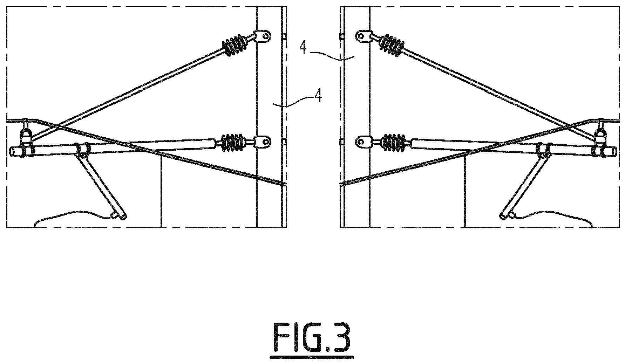

In practice, the image processor 125 receives images from the camera 121, extracts image data, e.g. videos/pictures, from the images and compares them with reference image data, for instance videos/pictures, of catenary poles images, as those illustrated in figure 3. In this way is possible to identify and confirm the presence of a catenary pole 4.

According to an embodiment of the method 200, the step 220 of comparing further comprises, upon identifying the presence of a position marker 4 based on the comparison of said reference pre-stored image data related to the position markers 4 with at least the captured first image data provided by the first camera (121), a sub-step 224 of triggering:
- a second camera 122 to capture second image data of identifiers 5 uniquely associated each to a corresponding position marker 4;
- and/or detection by said ground penetration radar (111) for providing said signals suitable for calculating a position (P) of the railway vehicle 1 along the railway line (10).

In practice, while the images captured and provided by the first camera 121 allows identifying the presence of a position marker 4, the images captured and provided by the second camera 122 allow to uniquely identified the present position marker 4, for instance within a predefined zone.

According to a possible embodiment, the sub-step 222 of identifying comprises in particular identifying the presence of a position marker 4 along the railway line 1 when captured first image data and third image data, different from the first image data, captured by the first and third cameras 121 and 123, match both with corresponding pre-stored first image data and third image data related to the position markers 4.

In particular, when the first camera 121 and the third camera 123 are used, they take image(s) continuously with the third camera 123 capturing a catenary pole 4 first, and then the first camera 121 sees the same pole 4 once the railway vehicle 1 passes over it. The image processor 125 receives both images, which are for instance related to an anterior part of a pole 4 and to a posterior part of the same pole 4, and compares them with corresponding pre-stored image data. In this way the safety of correctly identifying the presence of a pole 4 is further increased.

According to an embodiment, the step 210 of providing signals comprises providing, in addition to the signals provided by the ground penetration radar 11 indicative of the subsurface under the railway line 10 where the railway vehicle (1) is actually transiting, e.g. via the multi-axis accelerometer 113, signals indicative of the actual acceleration of the railway vehicle 1, which signals are preferably filtered by a Kalman filter algorithm 114 before inputting to the processing unit 140 and/or signals.

Accordingly, the step 230 of calculating comprises calculating the actual position (Pa) of the railway vehicle 1 between an identified first position marker 4 and a following position marker 4 to be reached, based on signals indicative of the actual acceleration of the railway vehicle 1, data relative to the first position marker 4, and actual data related to the subsurface under the railway line 10 where the railway vehicle (1) is actually transiting.

According to an embodiment of the method 200, the step 210 of providing a plurality of signals comprises providing, via the multi-axis gyroscope 112 signals indicative of an angular or rotational movement of the railway vehicle 1 with respect to a preceding substantially rectilinear movement, thus allowing to detect that the railway vehicle 1 has encountered a track changeover along its path, e.g. a point branching the previous direction with a left branch or a right branch of the railway line 10.

Accordingly, the step 230 comprises calculating the actual position Pa of the railway vehicle 1 along the railway line 10 including such signals provided by the gyroscope 112.

In practice, when a railway vehicle 1 enters into service for the first time of day, e.g. moving from a depot to a starting station, it is assigned, manually or automatically, with an initial zone number which is displayed on the human-machine interface 170. At each zone change over, the zone number is updated on the human-machine interface 170.

When image data for a first encountered catenary pole 4 are captured and processed by the top mounted camera (s) 121 (123) or 125(126) and the presence of a first catenary pole 4 is then confirmed by the image processor 125 using the reference images stored in the catenary pole image database 151, as previously described.

Then, the image processor 125 triggers the corresponding side-mounted camera 122 or 124 which captures image data of the identifier 5, e.g. the number plate of the associated catenary pole 4, and sent them to the image processor 125 for further processing.

Likewise, the image processor 125 triggers detection by the ground penetration radar 111 in order to get the map of the subsurface under the tracks of the railway line 10, cleaned from any residual subsurface details to be removed from the under-track map, as previously described.

The image processor 125 reads the catenary pole number, via comparison with image data pre-stored in the catenary pole number plate image database 152, and transmits the processed data, and in particular the identification or ID of the uniquely identified catenary pole 4, to the processing unit 140.

The processing unit 140 extracts information related to the catenary pole 4 from the catenary pole database 153 using for example the pair of identification elements zone number-catenary pole 4 ID, hence, the railway vehicle 1 is assigned with the zone number, the catenary pole ID and related location kilometric point, as the actual localization.

The processing unit 140 predicts the next catenary pole number using the pre-stored "list of upcoming catenary pole IDs" and the "list of the upcoming catenary pole", for instance considering distance and angle or deviation from the straight direction in case of changeovers, from the same database.

Conveniently, the processing unit 140 predicts also the maps expected from the ground penetration radar 111, using for example the pair of identification elements zone number-catenary pole 4 ID with data available in the catenary pole/accelerometer distance - ground penetration radar database 154 with the incremental distance as zero.

In particular, and according to the embodiment previously described, the ground penetration radar 111 processes both data received from the first pair of transmitter 111a-receiver 111b, and the second pair transmitter-receiver 111c-111d to generate the final maps of the subsurface cleaned from disturbances, for instance the excessive thickness data due to ballast/snow/ice, et cetera.

The ground penetration radar sends the generated maps to processing unit 140 which compares them with the expected map(s) and confirms the correctness of data provided by the radar 111 itself.

This confirmation is conveniently pursued by the processing unit 140 to place the request to the ground penetration radar 111 for further updates at an incremental distance, for example every 10 m.

As the measurements are available at the location of a catenary pole 4, the processing unit 140 sends a corresponding input signal to the extended Kalman filter 114 of the accelerometer to reset its incremental distance state. The previously estimated or initialized speed and acceleration data are kept as they are in extended Kalman filter 114, while the updated estimates are sent continuously to the processing unit 140.

Since the processing unit 140 has the information related to the actual zone number and catenary pole ID, it predicts the next expected maps from the catenary pole/ accelerometer distance - ground penetration radar database 154 with the actual incremental distance of the extended Kalman filter 114.

For example, the distance at the section between two poles is continuously measured using the accelerometer 113 along with the Kalman filter 114 which helps to propagate the location of the vehicle continuously till the next catenary pole 4. Such distance can be measured for example at sampling values of the accelerometer 113, e.g. 100 HZ.

At the suitable incremental distance, the processing unit 140 triggers the ground penetration radar 111 to provide the spot measurement data and the calculation above described are repeated until the railway vehicle 1 reaches the next upcoming catenary pole 4.

In particular, the processing unit 140 predicts the next upcoming catenary pole 4 and cameras are continuously triggered for detecting the presence and identity of a catenary pole with the current zone of the railway line 10. Also, during the various steps, the processing unit 140 takes into account and predicts the possible presence of points or track changeovers along the line 10 using the information pre-stored in the catenary pole database 153 and looks for signals provided by the gyroscope 112 which detects deviation in the direction of the railway vehicle 1 on a right or left direction with respect to the previous direction.

The entire cycle is continuously repeated for localizing the actual position of the railway vehicle 1 and the data can be updated in the relevant databases.

Hence, it is evident from the foregoing description and appended claims that the control system 100, the method 200, and the related railway vehicle 1 according to the present invention, achieve the intended aims and objects, since they allow to localize precisely and timely the position of a railway vehicle travelling along a railway line, even completely autonomously by the railway vehicle itself, and also to discriminate the presence and direction of a localized railway vehicle.

This result is obtained by exploiting components, such as catenary poles and related identification plates, already installed along a railway line 10 and normally used for other purposes, thus avoiding using ad hoc additional equipment mounted along the railway line.

Further, according to the present invention, the negative influence of operative and/or environmental conditions, such as the presence of snow, darkness, et cetera, is substantially mitigated, if not completely eliminated, and the system is robust enough to work properly also when, for whatever reason, one or more of the data/signals are momentarily not allowable. For example, if image data from a camera are not available, based on previous kilometric point of a previously identified catenary pole 4 and the data related to incremental distance calculated by the accelerometer 113, the maps from the ground penetration radar 111 are available and therefore it is still possible to estimate the actual position. If data from the ground penetration radar 111 are not available, e.g. when the vehicle is travelling over an iron bridge, then the localization of the railway vehicle 1 will be still available at the longer interval, e.g. at each distance from a catenary pole 4 and the following one, for example every 50-60 meters, instead of the shorter distance at which the ground penetration radar is set to generates maps, e.g. every 10 meters.

If accelerometer data are not available the extended Kalman filter 114 would still provide the model based propagated states such as the estimated distance, speed, and acceleration of the vehicle 1 with respect to the last ones calculated. Incremental distance will be reset to zero at each catenary pole location; and if accelerometer data would be the only data available, the extended Kalman filter 114 would still provide the estimated states of distance, speed, and acceleration using the data provided by the accelerometer 113 alone. In this case, since there would be no reset of the incremental distance, the estimates will be the cumulative distance from the last available location data. With the help of gyroscope, the train will be able to know the approximate location of a pole 4 based on catenary pole database 153 related information.

The method 100, system 200 and railway vehicle 1 thus conceived are susceptible of modifications and variations, all of which are within the scope of the inventive concept as defined in particular by the appended claims; for example, some parts of the control system 100 may reside on the same electronic unit, or they can even be realized as subparts of a same component or circuit of an electronic unit, or they can be placed remotely from each other and in operative communication there between. In addition, it is possible to replicate some or all the other components of the system 100 previously described, e.g. the various sensors, another processing unit 140 and other repositories 151-154. In this way the railway vehicle 1 would be provided with twins localizing systems 100 interchangeable with each other and positioned, for example one at the first wagon of a vehicle and the other at the last wagon.

Accordingly, it would be possible to localize the head and tail of a train in terms of inter-station ID, track ID, and catenary pole ID along with the distance traveled. These head and tail locations can be transmitted to a control unit, e.g. remote from the train, which can calculate the length of the train. If the calculated length of a train exceeds its expected length, then it is inferred that a part of a train parted, thus initiating the management of the train parting incident.

## Claims

1. A system (100) for localizing a railway vehicle (1) traveling on a railway line (10), **characterized in that** it comprises at least:
- one or more sensors (110) providing signals suitable for calculating a position (P) of the railway vehicle (1) along the railway line (10), said one or more sensors (110) comprising at least one ground penetrating radar (111);
- an imager system (120) comprising at least one camera (121) mounted on-board of the railway vehicle (1) and adapted to capture image data of position markers (4) located along the railway line (1), and an image processor (125) configured for receiving the image data captured and for comparing them with reference pre-stored image data related to the position markers (4) in order to identify a position marker (4) along the railway line (10) where the railway vehicle (1) is travelling;
- a processing unit (140) which is arranged to calculate the actual position (Pa) of the railway vehicle (1) along the railway line (10) based on one or more of an identified position marker (4) and of the signals received from said one or more sensors (110).

2. A system (100) for localizing a railway vehicle (1) traveling on a railway line (10) according to claim 1, wherein said one or more sensors (110) further comprises at least one multi-axis inertial sensor.

3. A system (100) for localizing a railway vehicle (1) traveling on a railway line (10) according to claim 2, wherein said at least one multi-axis inertial sensor comprises at least one multi-axis gyroscope (112) and/or at least a multi-axis accelerometer (113), said multi-axis accelerometer being combined with a Kalman filter (114).

4. A system (100) for localizing a railway vehicle (1) traveling on a railway line (10) according to anyone of claims 1 to 3, wherein said at least one ground penetrating radar (111) comprises a first transmitter (111a) and an associated first receiver (111b) providing first data indicative of the subsurface under the railway line (10) where the railway vehicle (1) is travelling, and a second transmitter (111c) and an associated second receiver (111d) providing second data indicative of elements or parts present on or associated to the railway line (10) to be cleaned from the first data.

5. A system (100) for localizing a railway vehicle (1) traveling on a railway line (10) according to anyone of claims 1 to 4, wherein said imager system (120) comprises at least a first camera (121) mounted on-board of the railway vehicle (1) with its field of vision oriented to capture first image data of position markers (4) located along the railway line (10), and a second camera (122) mounted on the railway vehicle (1) with its field of vision oriented to capture second image data of identifiers (5) uniquely associated each to a corresponding position marker (4).

6. A system (100) for localizing a railway vehicle (1) traveling on a railway line (10) according to claim 5, wherein said image processor (125) is configured to initialize said second camera (122) for capturing said second image data of identifiers (5) uniquely associated each to a corresponding position marker (4) and/or said ground penetration radar (111) for providing said signals suitable for calculating a position (P) of the railway vehicle (1) along the railway line (10), upon identifying the presence of a position marker (4) based on the comparison of said reference pre-stored image data related to the position markers (4) with at least the captured first image data provided by the first camera (121).

7. A system (100) for localizing a railway vehicle (1) traveling on a railway line (10) according to claim 6, wherein said first camera (121) is mounted on-board of the railway vehicle (1) with its field of vision oriented opposite to the direction of travel of the railway vehicle (1), and wherein the imager system comprises a third camera (123) mounted on-board of the railway vehicle (1) with its field of vision oriented in the direction of travel of the railway vehicle (1) to capture third image data of position markers (4) located along the railway line (10), said image processor (125) being arranged to identify the presence of a position marker (4) when both said first and third image data captured by said first camera (121) and said third camera (123) match with corresponding pre-stored first image data and third image data related to said position markers (4).

8. A system (100) for localizing a railway vehicle (1) traveling on a railway line (10) according to any one of the preceding claims, wherein it comprises one or more databases (150) comprising data selected from the group comprising reference image data related to said position markers, reference image data related to unique identifiers (5) associated each to a corresponding position marker (4), identification data related to a layout and/or parts or components of the railway line (10), identification data related to said position markers, data calculated based on signals provided by said at least one ground penetrating radar (111).

9. A method (200) for localizing a railway vehicle (1) traveling on a railway line (10), **characterized in that** it comprises at least the following steps:
- (210): providing signals suitable for calculating a position (P) of the railway vehicle (1) along the railway line, wherein the provided signals include at least signals provided by at least one ground penetrating radar (111);
- (220): comparing captured image data of position markers (4) located along the railway line (1) with reference pre-stored image data related to said position markers (4) in order to identify a position marker (4) along the railway line (10) where the railway vehicle (1) is travelling;
- (230): calculating the actual position (Pa) of the railway vehicle (1) along the railway line (10) based on one or more of the identified position marker (4) and of the signals provided (110).

10. A railway vehicle (1) **characterized in that** it comprises at least one localizing system (100) according to one or more of claims 1 to 8.
